# EUROPEAN PATENT APPLICATION

(11) **EP 4 797 184 A1**
(43) Date of publication of application: **26.08.2026**
(21) Application number: 25890388.9
(22) Date of filing: 12.12.2025
(51) Int. Cl.: G06Q 30/018

(54) **GREEN ELECTRICITY INFORMATION PROCESSING METHOD AND APPARATUS, ELECTRONIC DEVICE AND STORAGE MEDIUM**

(30) Priority: 13.12.2024 CN 202411834194
(71) Applicant: State Grid Digital Technology Holding Co., Ltd., Baoding, Hebei 071700 (CN); State Grid Blockchain Technology (Beijing) Co., Ltd., Baoding, Hebei 071700 (CN); State Grid Fujian Information & Telecommunication Company, Fuzhou, Fujian 350000 (CN)
(72) Inventor: LI, Hongfa, Fuzhou, Fujian 350000 (CN); CAI, Yuxiang, Fuzhou, Fujian 350000 (CN); WANG, Dong, Baoding, Hebei 071700 (CN); YANG, Ke, Baoding, Hebei 071700 (CN); BAI, Desheng, Baoding, Hebei 071700 (CN); LI, Chuang, Baoding, Hebei 071700 (CN); GUO, Qinglei, Baoding, Hebei 071700 (CN); FU, Ting, Baoding, Hebei 071700 (CN); GUO, Caiwei, Baoding, Hebei 071700 (CN); LIU, Liang, Baoding, Hebei 071700 (CN); WANG, Junsheng, Baoding, Hebei 071700 (CN); ZHANG, Xuesen, Baoding, Hebei 071700 (CN); YU, Guo, Baoding, Hebei 071700 (CN); JIANG, Tingting, Baoding, Hebei 071700 (CN); LYU, Jiayu, Baoding, Hebei 071700 (CN); DU, Zhe, Baoding, Hebei 071700 (CN); SHANG, Jiaping, Baoding, Hebei 071700 (CN); HAO, Jiahan, Baoding, Hebei 071700 (CN); LEI, Mingyang, Baoding, Hebei 071700 (CN)
(74) Representative: Mathys & Squire
(86) International application number: PCT/CN2025/142269
(87) International publication number: WO 2026/124663

(57) **Abstract**

The application relates to the technical field of electric power, and discloses a method and apparatus for processing green power information, an electronic device, and a storage medium. A specific solution of the application is as follows. For a scenario where distributed resource entities participate in power transactions, green certificates are issued to multiple distributed resource entities corresponding to the same aggregator. During issuance of the green certificates, for a distributed resource entity of which a certificate-to-be-issued quantity of green power exceeds a redemption standard quantity of power for redeeming a green certificate, an individual ownership green certificate and a corresponding remaining quantity of power are determined for the distributed resource entity; for a distributed resource entity of which a certificate-to-be-issued quantity of green power does not exceed the redemption standard quantity of power for redeeming a green certificate, the certificate-to-be-issued quantity of green power of the distributed resource entity is used as a remaining quantity of power, and then a common ownership green certificate is issued to the remaining quantity of power of each of the distributed resource entities.

## Description

### CROSS-REFERENCE TO RELATED APPLICATION

This application claims priority to Chinese patent application No. 202411834194.5 filed at China National Intellectual Property Administration (CNIPA) on December 13, 2024 and entitled "METHOD AND APPARATUS FOR PROCESSING GREEN POWER INFORMATION, ELECTRONIC DEVICE, AND STORAGE MEDIUM", the disclosure of which is hereby incorporated by reference in its entirety.

### TECHNICAL FIELD

The application relates to the technical field of electric power, and in particular to a method and system for processing green power information, an electronic device, and a storage medium.

### BACKGROUND

With the continuous and rapid growth of distributed new energy installed capacity and the spatiotemporal imbalance between supply and demand of new energies, curtailment rates of wind and solar power remain high in some regions, and the pressure on absorption of new energy power has become increasingly apparent.

The power market plays a significant role in optimizing resource allocation, improving power security and supply guarantee capability, promoting absorption of renewable energy, or other aspects. In particular, new-type entities such as a Virtual Power Plant (VPP) or the like have entered the market, which provides more and more new ways for the distributed new energy to participate in the power market. However, for distributed new energy power generation entities, the following problems have also been raised.
(1) Since a vast majority of distributed new energies have low installed capacities, they usually does not meet conditions of entering the market independently, and they participating in the power market through aggregation models such as VPP or the like has become an inevitable choice. However, this also results in a longer transmission link of power generation data of the distributed new energy, an increased number of interactive objects, and more complicated guarantee of data authenticity. Multiple distributed resources are aggregated to participate in transactions such that a transaction quantity of power become a total accumulated quantity of power, which is difficult to correspond to power generation data of each distributed resource one-to-one, and significantly increases difficulty of green power traceability.
(2) In case that distributed resources are aggregated as a whole to participate in power transactions based on power transaction data, green power certificates may only be issued to aggregators or other relevant entities. At present, there is a lack of a mechanism for fair and transparent allocation of green certificates to each distributed resource entity, hindering further development of trading green certificates or other relevant businesses.
(3) For self-generated and self-consumed quantities of power of distributed resources, there is a lack of a trusted measurement mechanism at present, such that it is difficult to support issuance of green certificates to these quantities of power, and it cannot guarantee green power benefits of distributed resource entities. For adjustable load entities, after they are aggregated to participate in transactions at the green power market, green certificates are transferred to aggregators or other relevant entities; however, at present, there is a lack of a mechanism for allocation of green certificates to each load entity.

The green power traceability refers to locking in green entitlements of renewable energy power stations with digital technologies, and ensuring the true traceability of green energy consumption and the uniqueness of green entitlements through a real-time queryable power station traceability system.

The issuance of green certificates refers to issuance of transaction green certificates to on-grid quantities of power of renewable energy power generation projects such as wind power, solar power generation, biomass power generation, geothermal energy power generation, ocean energy power generation or the like, as well as on-grid quantities of power of fully market-oriented conventional hydropower projects newly put into operation after January 1, 2023 (inclusive).

### SUMMARY

The application provides a method and system for processing green power information, an electronic device, and a storage medium, which may solve at least one of the above problems.

The application provides a method for processing green power information, the method includes the following operations.

In response to a current settlement requested for an aggregator, a certificate-to-be-issued quantity of green power of each of multiple distributed resource entities corresponding to the aggregator is acquired.

For each of the distributed resource entities, in case that the certificate-to-be-issued quantity of green power of each of the distributed resource entities exceeds a redemption standard quantity of power for redeeming a green certificate, a first number of individual ownership green certificates of each of the distributed resource entities and a first remaining quantity of power of each of the distributed resource entities in the current settlement are determined based on the certificate-to-be-issued quantity of green power of each of the distributed resource entities and the redemption standard quantity of power; in case that the certificate-to-be-issued quantity of green power of each of the distributed resource entities does not exceed the redemption standard quantity of power, the certificate-to-be-issued quantity of green power of each of the distributed resource entities is used as the first remaining quantity of power of each of the distributed resource entities in the current settlement.

A second number of common ownership green certificates of the multiple distributed resource entities is determined based on the first remaining quantity of power of each of the distributed resource entities in the current settlement.

Corresponding green certificates are issued to the multiple distributed resource entities corresponding to the aggregator based on the first number of individual ownership green certificates of each of the distributed resource entities and the second number of common ownership green certificates of the multiple distributed resource entities.

According to another aspect of the application, there is provided an apparatus for processing green power information, the apparatus includes a power quantity information acquisition module, a first calculation module, a second calculation module and a green certificate issuance module.

The power quantity information acquisition module is configured to: in response to a current settlement requested for an aggregator, acquire a certificate-to-be-issued quantity of green power of each of multiple distributed resource entities corresponding to the aggregator.

The first calculation module is configured to: for each of the distributed resource entities, in case that the certificate-to-be-issued quantity of green power of each of the distributed resource entities exceeds a redemption standard quantity of power for redeeming a green certificate, determine a first number of individual ownership green certificates of each of the distributed resource entities and a first remaining quantity of power of each of the distributed resource entities in the current settlement based on the certificate-to-be-issued quantity of green power of each of the distributed resource entities and the redemption standard quantity of power; in case that the certificate-to-be-issued quantity of green power of each of the distributed resource entities does not exceed the redemption standard quantity of power, use the certificate-to-be-issued quantity of green power of each of the distributed resource entities as the first remaining quantity of power of each of the distributed resource entities in the current settlement.

The second calculation module is configured to determine a second number of common ownership green certificates of the multiple distributed resource entities based on the first remaining quantity of power of each of the distributed resource entities in the current settlement.

The green certificate issuance module is configured to issue corresponding green certificates to the multiple distributed resource entities corresponding to the aggregator based on the first number of individual ownership green certificates of each of the distributed resource entities and the second number of common ownership green certificates of the multiple distributed resource entities.

According to another aspect of the application, there is provided an electronic device, the electronic device includes at least one processor and a memory communicatively connected to the at least one processor.

The memory has stored thereon instructions executable by the at least one processor, the instructions are executed by the at least one processor to enable the at least one processor to perform the method for processing green power information according to any one of embodiments of the application.

According to another aspect of the application, there is provided a non-transitory computer-readable storage medium, the non-transitory computer-readable storage medium has stored thereon computer instructions, the computer instructions enable a computer to perform the method for processing green power information according to any one of the embodiments of the application.

With the technical solutions of the application, for a scenario where distributed resource entities participate in power transactions, green certificates are issued to multiple distributed resource entities corresponding to the same aggregator. During issuance of the green certificates, for a distributed resource entity of which a certificate-to-be-issued quantity of green power exceeds a redemption standard quantity of power for redeeming a green certificate, an individual ownership green certificate and a corresponding remaining quantity of power are determined for the distributed resource entity; for a distributed resource entity of which a certificate-to-be-issued quantity of green power does not exceed the redemption standard quantity of power for redeeming a green certificate, the certificate-to-be-issued quantity of green power of the distributed resource entity is used as a remaining quantity of power, and then a common ownership green certificate is issued to the remaining quantity of power of each of the distributed resource entities. In this way, a situation where a distributed resource entity cannot obtain a green certificate due to an insufficient quantity of green power may be avoided. Furthermore, the solution may improve efficiency of issuance of the green certificates.

### BRIEF DESCRIPTION OF THE DRAWINGS

FIG. 1 is a flowchart of a method for processing green power information according to an embodiment of the application.
FIG. 2 is a schematic diagram of a blockchain platform according to an embodiment of the application.
FIG. 3 is a structural block diagram of an apparatus for processing green power information according to an embodiment of the application.
FIG. 4 is a block diagram of an electronic device for implementing the embodiments of the application.

### DETAILED DESCRIPTION

Exemplary embodiments of the application will be described below with reference to the drawings, the drawings include various details of the embodiments of the application to facilitate understanding them, and should be considered as exemplary only. Therefore, it should be appreciated by those of ordinary skill in the art that various variations and modifications may be made to the embodiments described here, without departing from the scope of the application. Similarly, descriptions of well-known functions and structures are omitted from the following descriptions for the sake of clarity and conciseness.

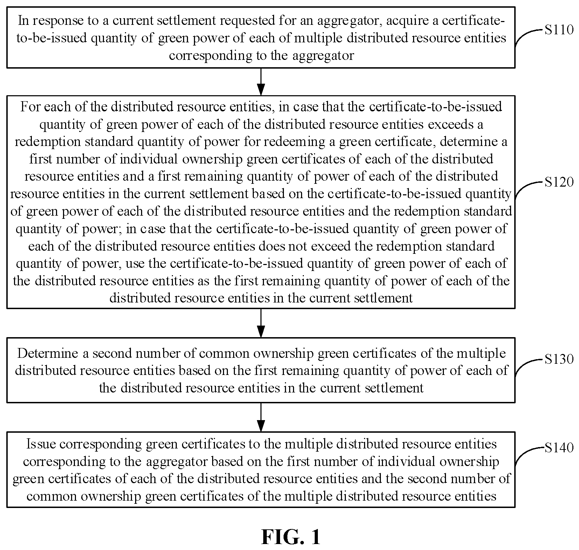

FIG. 1 is a flowchart of a method for processing green power information according to an embodiment of the application.

As shown in FIG. 1, the method for processing green power information may include the following operations S110 to S140.

In operation S110, in response to a current settlement requested for an aggregator, a certificate-to-be-issued quantity of green power of each of multiple distributed resource entities corresponding to the aggregator is acquired.

In operation S120, for each of the distributed resource entities, in case that the certificate-to-be-issued quantity of green power of each of the distributed resource entities exceeds a redemption standard quantity of power for redeeming a green certificate, a first number of individual ownership green certificates of each of the distributed resource entities and a first remaining quantity of power of each of the distributed resource entities in the current settlement are determined based on the certificate-to-be-issued quantity of green power of each of the distributed resource entities and the redemption standard quantity of power; in case that the certificate-to-be-issued quantity of green power of each of the distributed resource entities does not exceed the redemption standard quantity of power, the certificate-to-be-issued quantity of green power of each of the distributed resource entities is used as the first remaining quantity of power of each of the distributed resource entities in the current settlement.

In operation S130, a second number of common ownership green certificates of the multiple distributed resource entities is determined based on the first remaining quantity of power of each of the distributed resource entities in the current settlement.

In operation S140, corresponding green certificates are issued to the multiple distributed resource entities corresponding to the aggregator based on the first number of individual ownership green certificates of each of the distributed resource entities and the second number of common ownership green certificates of the multiple distributed resource entities.

It may be understood that the method provided in the embodiment of the application may be applied to a power transaction center. The power transaction center may acquire relevant data from a blockchain to perform the above method. The above method may be performed at a predicted frequency, for example every 15 minutes, 20 minutes, or 30 minutes. In this way, efficiency of issuance of the green certificates may be improved.

Exemplarily, the aggregator may be a transaction entity for aggregating one or more distributed resource entities that are close to each other geographically. These distributed resource entities may be resource entities with a few quantity of power or a too insufficient quantity of power to redeem a green certificate, such as distributed power generation entities or small-scale power users.

It may be understood that for the distributed power generation entities, the above certificate-to-be-issued quantity of green power and the first remaining quantity of power are quantities of generated power. For distributed power users, the above certificate-to-be-issued quantity of green power and the first remaining quantity of power are quantities of consumed power.

It may be understood that the redemption standard quantity of power for redeeming a green certificate is a power quantity of 1 MWh.

According to the above implementation, for a scenario where distributed resource entities participate in power transactions, green certificates are issued to multiple distributed resource entities corresponding to the same aggregator. During issuance of the green certificates, for a distributed resource entity of which a certificate-to-be-issued quantity of green power exceeds a redemption standard quantity of power for redeeming a green certificate, an individual ownership green certificate and a corresponding remaining quantity of power are determined for the distributed resource entity; for a distributed resource entity of which a certificate-to-be-issued quantity of green power does not exceed the redemption standard quantity of power for redeeming a green certificate, the certificate-to-be-issued quantity of green power of the distributed resource entity is used as a remaining quantity of power, and then a common ownership green certificate is issued to the remaining quantity of power of each of the distributed resource entities. In this way, a situation where a distributed resource entity cannot obtain a green certificate due to an insufficient quantity of green power may be avoided. Furthermore, the solution may improve efficiency of issuance of the green certificates.

In an implementation, the operation of determining the first number of individual ownership green certificates of each of the distributed resource entities and the first remaining quantity of power of each of the distributed resource entities in the current settlement based on the certificate-to-be-issued quantity of green power of each of the distributed resource entities and the redemption standard quantity of power, includes the following operations. The first number of individual ownership green certificates of each of the distributed resource entities is obtained by rounding a ratio between the certificate-to-be-issued quantity of green power of each of the distributed resource entities and the redemption standard quantity of power. The first remaining quantity of power of each of the distributed resource entities in the current settlement is obtained by subtracting a product of the redemption standard quantity of power and the first number from the certificate-to-be-issued quantity of green power of each of the distributed resource entities.

Exemplarily, taking the distributed resource entity as an example, the first number and the first remaining quantity of power may be calculated in a manner as follows.

Specifically, a quantity of power generated by an i-th distributed power generation entity is *Eᵢ.* For a distributed power generation entity of which an on-grid quantity of power exceeds 1 MWh, an individual ownership green certificate is issued to a quantity of power meeting 1 MWh, and a common ownership green certificate is issued to a remaining quantity of power, a calculation formula thereof is as follows. ${n}_{i} = \left[\frac{E}{1000}\right]$ ${e}_{i} = {E}_{i} - 1000 ∗ {n}_{i}$

Here, *nᵢ* represents a number of individual ownership green certificates issued to the i-th distributed power generation entity; *eᵢ* represents a remaining quantity of power less than 1 MWh of the i-th distributed power generation entity, that is, the above first remaining quantity of power.

Similarly, for a small-scale power user of which a quantity of consumed power exceeds 1 MWh, a number of individual ownership green certificates of the user and a first remaining quantity of power of the user in the current settlement may also be determined as above.

According to the above implementation, for a distributed resource entity of which a quantity of green power exceeds 1 MWh, a number of individual ownership green certificates of the distributed resource entity and a remaining quantity of power of the distributed resource entity to which a common ownership green certificate is issued may be determined, such that corresponding green certificates may be issued to resources as much as possible.

In an implementation, the operation of determining the second number of common ownership green certificates of the multiple distributed resource entities based on the first remaining quantity of power of each of the distributed resource entities in the current settlement, includes the following operations. The second number of common ownership green certificates of the multiple distributed resource entities is obtained by summing the first remaining quantity of power of each of the distributed resource entities in the current settlement and rounding a ratio of a summing result to the redemption standard quantity of power.

Exemplarily, an example that the distributed resource entity is a power generation entity is taken, in case that a quantity of power generated by a single distributed power generation entity is less than 1 MWh while a total quantity of power generated by multiple power generation entities is equal to or greater than 1 MWh, a green certificate is issued to aggregation of the multiple entities, a calculation formula thereof is as follows. $N = \left[\frac{{\sum }_{i = 1}^{n} {e}_{i}}{1000}\right]$

Here, N represents a number of common ownership green certificates.

Exemplarily, for a power user, a formula similar to the above formula may also be used. In case that a quantity of power consumed by a single small-scale power user is less than 1 MWh while a total quantity of power consumed by multiple small-scale power users is equal to or greater than 1 MWh, a green certificate is transferred to aggregation of the multiple small-scale power users.

According to the above implementation, in case that a quantity of power generated by a single distributed power generation entity is less than 1 MWh while a total quantity of power generated by multiple power generation entities is equal to or greater than 1 MWh, a green certificate may be issued to aggregation of the multiple entities, such that a situation where a distributed power generation entity cannot obtain a green certificate since a quantity of power generated by it is too insufficient to issue the green certificate may be avoided.

In an implementation, the operation of acquiring the certificate-to-be-issued quantity of green power of each of the multiple distributed resource entities corresponding to the aggregator, includes the following operations. A smart contract and a contract text of the aggregator are acquired from a blockchain. A first total transaction quantity of power of the aggregator is determined from the contract text. A first transaction quantity of power of each of the distributed resource entities is obtained by decomposing the first total transaction quantity of power. In case that the first total transaction quantity of power is matched with a second total transaction quantity of power of the aggregator calculated by the smart contract, and the first transaction quantity of power of each of the distributed resource entities is matched with a second transaction quantity of power of a corresponding one of the distributed resource entities calculated by the smart contract respectively, a certificate-to-be-issued quantity of green power of each of the distributed resource entities in the current settlement is determined based on a second transaction quantity of power of each of the distributed resource entities calculated by the smart contract. A remaining certificate-to-be-issued quantity of green power of each of the distributed resource entities in a previous settlement is acquired from the blockchain. The certificate-to-be-issued quantity of green power of each of the distributed resource entities in the current settlement and the remaining certificate-to-be-issued quantity of green power of each of the distributed resource entities in the previous settlement are summed respectively, to update the certificate-to-be-issued quantity of green power of each of the distributed resource entities in the current settlement.

It may be understood that the contract text is a contract signed in advance between the aggregator and each of the distributed resource entities corresponding thereto, and the contract may record a total transaction quantity of power of the aggregator in a certain period of time and a transaction quantity of power of each of the distributed resource entities.

It may be understood that a transaction quantity of power of the aggregator and a transaction quantity of power of each of the distributed resource entities corresponding thereto in a certain period of time may be calculated by the smart contract.

It may be understood that when it is mentioned that the first total transaction quantity of power is matched with the second total transaction quantity of power of the aggregator recorded in the smart contract, it means that a difference between the first total transaction quantity of power and the second total transaction quantity of power does not exceed a preset first threshold.

It may be understood that for any one of the distributed resource entities, when it is mentioned that its first transaction quantity of power is matched with its second transaction quantity of power, it means that a difference between the first transaction quantity of power and the second transaction quantity of power does not exceed a preset second threshold.

It may be understood that the green certificate may be issued to the aggregator at a regular time interval. It may be understood that in this example, except a situation where settlement on quantity of power is performed for the aggregator to issue a green certificate for the first time, the above operations are performed, such that the remaining certificate-to-be-issued quantity of green power in the previous settlement is added to the certificate-to-be-issued quantity of green power in the current settlement, to update the certificate-to-be-issued quantity of green power in the current settlement. That is, an updated certificate-to-be-issued quantity of green power is used as a certificate-to-be-issued quantity of green power for which issuance of a green certificate is required in the current settlement finally.

It may be understood that the above operations S120 to S140 are performed based on the certificate-to-be-issued quantity of green power for which issuance of a green certificate is required in the current settlement finally.

According to the above implementation, each time a green certificate is issued, it needs to consider the remaining certificate-to-be-issued quantity of green power in the previous settlement, such that a situation where a green certificate cannot be issued to this part of remaining quantity of power may be avoided, to improve efficiency of issuance of the green certificate.

In an implementation, the method further includes the following operations. A second remaining quantity of power of the multiple distributed resource entities in the current settlement is obtained by summing the first remaining quantity of power of each of the distributed resource entities in the current settlement and subtracting a product of the second number and the redemption standard quantity of power from a summing result. In case of determining that the second remaining quantity of power is greater than zero and less than the redemption standard quantity of power, for each of the distributed resource entities, a remaining certificate-to-be-issued quantity of green power of each of the distributed resource entities in the current settlement is obtained by subtracting a sum of a corresponding quantity of power of each of the distributed resource entities in each of the common ownership green certificates from the first remaining quantity of power of each of the distributed resource entities in the current settlement, here the remaining certificate-to-be-issued quantity of green power of each of the distributed resource entities in the current settlement is used in a next settlement requested for the aggregator.

Exemplarily, an example that the distributed resource entity is a power generation entity is taken, the second remaining quantity of power is $s = {\sum }_{i = 1}^{n} {e}_{i} - 1000 ∗ N$.

Here, *s* represents a remaining quantity of power that is still less than 1 MWh after a common ownership green certificate is issued to multiple power generation entities, that is, the above second remaining quantity of power.

Exemplarily, a process of issuing the common ownership green certificate may be as follows.

A first remaining quantity of power *eᵢ* of each of distributed power generation entities is sorted in a descending order. Then, the first remaining quantity of power *eᵢ* is superimposed from front to back, and a green certificate is issued each time a power quantity of 1 MWh is met. In this way, an ownership of each of the power generation entities in the common ownership green certificate may be allocated based on a proportion of a quantity of power of each of the power generation entities in a quantity of power corresponding to the green certificate. Assuming that a quantity of power of each of the power generation entities in a quantity of power corresponding to a j-th green certificate is (*e*₁*^{j}, e*₂*^{j}, ···*, *eₙ^{j}*), the ownership is allocated as follows: $\left(\frac{{{e}_{1}}^{j}}{{e}^{j}},\frac{{{e}_{2}}^{j}}{{e}^{j}},…,\frac{{{e}_{n}}^{j}}{{e}^{j}}\right) , {e}^{j} = {\sum }_{i = 1}^{n} {{e}_{i}}^{j} , j = 1 , 2 , … , N .$

Exemplarily, a green certificate is not issued to the above second remaining quantity of power s temporarily.

Then, a remaining certificate-to-be-issued quantity of green power (*s*₁, *s*₂, ..., *sₙ*) of each of the distributed power generation entities in the current settlement is calculated and stored in the blockchain, to wait for a next settlement cycle.

Here, a calculation formula of *sᵢ* is as follows: ${s}_{i} = {e}_{i} - {\sum }_{j = 1}^{N} {{e}_{i}}^{j} , i = 1 , 2 , … , n .$

For distributed power users, a remaining certificate-to-be-issued quantity of green power of each of the distributed power users in the current settlement may also be determined by the above example.

According to the above implementation, when the remaining quantity of power less than 1 MWh is greater than zero after the common ownership green certificate is issued to multiple distributed resource entities, the remaining certificate-to-be-issued quantity of green power of each of the distributed resource entities in the current settlement may be determined for each of the distributed resource entities, to be used in a next settlement requested for the aggregator.

The method according to the above example may be performed by the power transaction center, and a piece of data obtained each time it is performed may be uploaded to the blockchain for evidence storage, to be used in subsequent traceability, right confirmation, subsequent flexible transaction or usage, etc.

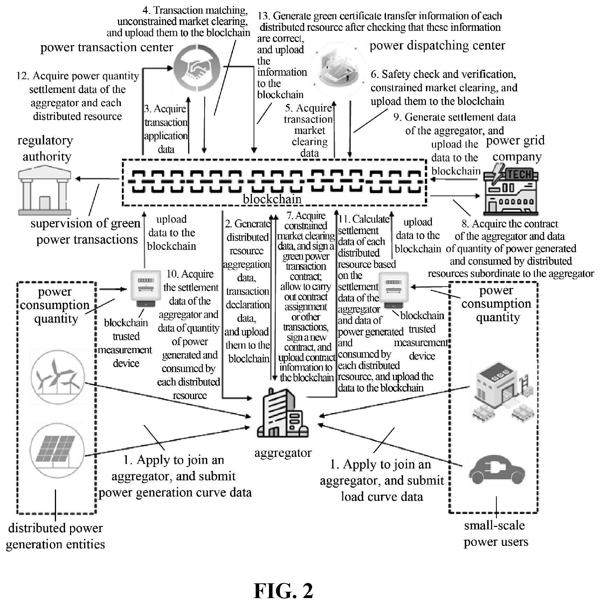

FIG. 2 is a schematic diagram of a blockchain platform according to an embodiment of the application.

As shown in FIG. 2, a blockchain platform composed of distributed power generation entities, small-scale power users, an aggregator, a power grid company, a power dispatching center, a power transaction center, a regulatory authority or other entities is built first, here blockchain trusted measurement devices are mounted to the distributed power generation entities and small-scales power users respectively, and blockchain nodes are deployed for other entities respectively; secondly, the aggregator aggregates distributed resource entities, each of the distributed resource entities applies to join a certain aggregator and signs an agency contract with the aggregator, the aggregator acts as an independent entity to participate in power market transactions on behalf of all the distributed resource entities subordinate to the aggregator; thirdly, a green power trusted traceability mechanism for aggregation of distributed resources is established, relevant data of 15-minute fine-grained power generated and consumed by the distributed resources are acquired and are uploaded to the blockchain platform, the aggregator uploads data of aggregation of generated and consumed power, transaction process data, transaction decomposition data or the like to the blockchain, the power transaction center uploads transaction application data, result data or the like to the blockchain, and the power grid company uploads on-grid power quantity data or the like to the blockchain, to establish a fine-grained traceability system for a full life cycle of green power; a mechanism of green certificate issuance, right confirmation and allocation for aggregation of multiple entities is designed, a green certificate is issued for aggregation of multiple entities based on a transaction quantity of power for the aggregation and an on-grid quantity of power, an ownership allocation proportion of the green certificate is determined based on a proportion of quantity of power generated and consumed by each of the distributed resource entities, to achieve green power of aggregation of multiple entities, the green certificate traceability, right confirmation and flexible usage.

The blockchain platform will be introduced below with reference to FIG. 2, specifically as follows.
1. A blockchain platform for green power traceability and green certificate issuance is built.

In a scenario where distributed resources are aggregated to participate in power market transactions, relevant entities include distributed power generation entities, small-scale power users, an aggregator, a power grid company, a power dispatching center, a power transaction center, a regulatory authority or other entities, and a multi-entity blockchain platform is built, to provide trusted support for green power traceability and green certificate issuance businesses.

Blockchain nodes are deployed for the aggregator, the power grid company, the power dispatching center, the power transaction center, the regulatory authority or other entities respectively by a consortium blockchain technology, to build a blockchain consensus network composed of multiple entities.

The scenario where distributed resources are aggregated to participate in power market transactions, may be subdivided into a situation where distributed power generation entities are aggregated to participate in power market transactions and a situation where small-scale power users are aggregated to participate in power market transactions.

The distributed power generation entities are generation sources of green power, and need to record source data credibly. A blockchain trusted measurement device is mounted to each of the distributed power generation entities, and a blockchain client is deployed in the device, which may support uploading source power generation data to the blockchain directly. For a full-grid-integration distributed power generation entity, a blockchain trusted measurement device is deployed to upload a power generation data source to the blockchain. For a self-generation, self-consumption and surplus-grid-integration distributed power generation entity, two blockchain trusted measurement devices may be deployed, one of the blockchain trusted measurement devices is used for recording total power generation data, and another one of the blockchain trusted measurement devices is used for recording on-grid power quantity data, which may support measuring self-generated and self-consumed quantity of power and measuring on-grid transaction quantity of power simultaneously.

The small-scale power users are consumers of green power, and also need to record their power consumption data credibly. A blockchain trusted measurement device is mounted to each of the small-scale power users, and a blockchain client is deployed in the device, which may support uploading source power consumption data to the blockchain directly.

### 2. The distributed resources are aggregated by the aggregator.

The aggregator may be specifically subdivided into a Virtual Power Plant (VPP), a load aggregator, etc. The VPP may aggregate distributed power generation entities to form a power generation entity, or may aggregate small-scale power users to form a power consumption entity, to participate in power market transactions. Furthermore, the load aggregator aggregates small-scale power users to form a power consumption entity, to participate in power market transactions. Aggregation processes are as follows.
(1) Each of the distributed resource entities submits an aggregation application to the aggregator, and simultaneously submits relevant power generation and consumption information such as an installed capacity or electric load, etc.
(2) The aggregator reviews relevant materials of the distributed resource entities, agrees corresponding distributed resource entities to join an aggregation team if the distributed resource entities meet requirements respectively, and signs an agency contract with each of the distributed resource entities respectively, to participate in power market transactions on behalf of the distributed resource entities.
(3) Each of the distributed resource entities sends relevant parameters of its blockchain trusted measurement device to the aggregator, such that the aggregator may view and acquire power data uploaded by each of the distributed resource entities using the blockchain trusted measurement device.
(4) The aggregator registers, with the power transaction center, multiple distributed resource entities managed by the aggregator as a whole, such that the multiple distributed resource entities become a power market entity and have qualification of participating in power market transactions.

### 3. A green power trusted traceability mechanism for aggregation of distributed resources

A green power data traceability mechanism for aggregation of distributed resources is established, and a fine-grained traceability system for sources, grid and loads is established, to solve a problem of complicated traceability paths caused by the aggregator acting as an intermediate agency.

With respect to aggregating distributed power generation entities to participate in power market transactions, processing processes of their green power data are specifically as follows.
(1) Each of the distributed power generation entities declares power generation curve data to the aggregator, while acquires relevant data such as 15-minute fine-grained power generation quantity or the like by the blockchain trusted measurement device and uploads the data to the blockchain for evidence storage. The power generation curve is obtained based on a federated learning mechanism. The distributed power generation entities under the same aggregator are close to each other in terms of distance and have similar lighting conditions, temperature conditions or the like, then in order to improve prediction accuracy of the power generation curve, multiple distributed power generation entities may be combined to achieve prediction in a higher accuracy through data sharing. It should be noted that when a federated learning and training system is established, it needs to be carried out separately based on different types of power generation such as a photovoltaic station, a wind station, etc. Specific operations are as follows:
(1.1) A power generation curve prediction model based on federated learning is established, a training model of each of the distributed power generation entities is as follows. ${y}_{i} = {x}_{i} {ω}_{i} + {b}_{i} , i = 1 , 2 , … , n .$ ${x}_{1} = {x}_{2} = ⋯ = {x}_{n} , {y}_{1} \neq {y}_{2} \neq ⋯ \neq {y}_{n} , {I}_{1} \neq {I}_{2} \neq ⋯ \neq {I}_{n} , {D}_{i} = \left\{\left({x}_{i}, {y}_{i}, {I}_{i}\right)\right\} .$

Here, *xᵢ* represents a sample feature set owned by an i-th distributed power generator respectively, which mainly includes basic information of a power station such as a designed power generation capacity, a component type, an inclination angle or the like, and historical weather data such as temperature, humidity or the like, and each power generator has the same data dimension; *yᵢ* represents a sample label set owned by the i-th distributed power generator respectively, and in the model, the sample label may be a power generation quantity in a certain period of time or the like; *Iᵢ* represents a sample ID set owned by the i-th distributed power generator respectively, and each distributed power generator has its own sample set with different IDs; *Dᵢ* represents a sample data set owned by the i-th distributed power generator respectively, i = 1, 2, ..., n.

(1.2) Each participant trains its own model parameter *(ωᵢ^{t}*, *bᵢ^{t}*) with its own sample data set respectively, t represents a t-th round of training, and each participant submits the model parameter to the blockchain platform.

(1.3) A federated learning smart contract calculates a total model parameter (*ω^{t}*, *b^{t}*) automatically after collecting model parameters of all participants, here a weighted average method may be used with a formula as follows: ${ω}^{t} = {\sum }_{i = 1}^{n} {{λ}_{i}}^{t} {{ω}_{i}}^{t} ; {b}^{t} = {\sum }_{i = 1}^{n} {{λ}_{i}}^{t} {{b}_{i}}^{t} .$

Here, *λᵢ^{t}* represents a weight proportion of a model parameter of an i-th participant in the t-th round of training, which may be a ratio of a number of samples of each participant to a total number of samples, 1 - a ratio of an Euclidean distance between a model parameter of each participant and model parameters of other participants to a total distance of all the participants, etc.

(1.4) When a difference between (*ω^{t}, b^{t}*) and (*ω*^{*t*-1}, *b*^{*t*-1}) is less than a certain threshold, training of a federated learning model ends, and each participant acquires final model parameters generated by the smart contract.

(1.5) Each distributed power generator generates its own power generation curve based on the final model parameters.

(2) The aggregator receives power generation curve data of all the distributed power generation entities and generates aggregated power generation curve data by way of point-by-point accumulation of curves, the aggregator acts as an agency entity to participate in power market transactions, declares information such as quantity of power, price of power or the like, and uploads relevant information to the blockchain for evidence storage. A calculation formula of a power generation curve value of the aggregator at any time T from 0 to 24 hours every day is as follows: ${y}^{T} = {\sum }_{i = 1}^{n} {{y}_{i}}^{T} .$

(3) The power transaction center acquires all transaction declaration data, organizes and carries out matching between power supply and demand, forms unconstrained market clearing data, and uploads relevant data to the blockchain for evidence storage.

(4) The power dispatching center acquires the unconstrained market clearing data submitted by the power transaction center, carries out safety check and verification, generates data such as constrained market clearing data, dispatching information or the like, and uploads the data to the blockchain for evidence storage.

(5) The aggregator acquires the constrained market clearing data and signs a green power transaction contract with a power buyer based on market clearing information, the contract of the aggregator includes a total transaction quantity of power of the aggregator and may also include a respective transaction quantity of power decomposed into each distributed power generator, and contract-related data is uploaded to the blockchain for evidence storage.

It is worth noting that when the aggregator participates in power transactions, the aggregator is allowed to carry out contract assignment or contract repurchase or other transactions monthly or at a shorter period based on an actual power generation and consumption situation, which needs to sign a new contract assignment or contract repurchase agreement and upload relevant agreement information to the blockchain for evidence storage.

(6) The power grid company generates green power quantity settlement information of the aggregator based on a total on-grid quantity of power of each of the distributed power generation entities subordinate to the aggregator, a quantity of power in the contract of the aggregator, a quantity of power consumed by users, contract assignment and contract repurchase or other information, and uploads relevant information to the blockchain for evidence storage.

The total on-grid quantity of power of each of the distributed power generation entities is calculated based on the 15-minute fine-grained power generation quantity acquired by the blockchain trusted measurement device, a smart contract for calculating a total on-grid quantity of power may be designed with measurement start time and end time as parameters to achieve automatic calculation. A total on-grid quantity of power of the aggregator is equal to a sum of the total on-grid quantity of power of each of the distributed power generation entities.

(7) The aggregator acquires its green power quantity settlement information, decomposes a settlement result to each of the distributed power generation entities based on an on-grid quantity of power of each of the distributed power generation entities, determines green power quantity settlement information of each of the distributed power generation entities, and uploads relevant information to the blockchain for evidence storage.

Decomposition of a power generation quantity settlement result may be automatically achieved by an Artificial Intelligence (AI)-based method for extracting the quantity of power in the contract of the aggregator. A respective transaction quantity of power of each distributed power generator in the contract is obtained by intelligent extraction of texts of the contract of the aggregator, and the green power quantity settlement information of each of the distributed power generation entities is determined in combination with a result of the smart contract for calculating the total on-grid quantity of power.

(8) The power transaction center acquires the green power quantity settlement information of the aggregator and the green power quantity settlement information of each of the distributed power generation entities, and generates green certificate transfer information of each of the distributed power generation entities after checking that these information are correct.

In conclusion, a green power trusted traceability mechanism for the distributed power generation entities to participate in power market transactions is built by uploading full-process information such as 15-minute fine-grained green power generation data of each of the distributed power generation entities, aggregation, declaration, transaction, settlement, settlement decomposition or the like to the blockchain, to support the distributed power generation entities to participate in green power transactions conveniently and support management of the full life cycle of green power.

With respect to aggregating distributed power generation entities to participate in power market transactions, processing processes of their green power data are specifically as follows.
(1) Each of small-scale power users declares load curve data to the aggregator, uploads the declared curve to the blockchain platform for evidence storage, while acquires relevant data such as 15-minute fine-grained power consumption quantity or the like by the blockchain trusted measurement device and uploads the data to the blockchain for evidence storage. The load curve may also be obtained based on a federated learning mechanism. The small-scale power users under the same aggregator are close to each other in terms of distance and have similar living environments, then in order to improve prediction accuracy of the load curve, multiple small-scale power users may be combined to achieve prediction in a higher accuracy through data sharing. It should be noted that when a federated learning and training system is established, it needs to be carried out separately based on different types of power consumption such as charging Electric Vehicle (EV), industrial and commercial users, air-conditioning loads, etc. Modeling processes are similar to those in (I) and will not be elaborated.
(2) The aggregator receives load curve data of all the small-scale power users and generates aggregated load curve data by way of point-by-point accumulation of load curves, the aggregator acts as an agency entity to participate in green power market transactions, declares information such as quantity of power, price of power or the like, and uploads relevant information to the blockchain for evidence storage.
(3) The power transaction center acquires all transaction declaration data, organizes and carries out matching between power supply and demand, forms unconstrained market clearing data, and uploads relevant data to the blockchain for evidence storage.
(4) The power dispatching center acquires the unconstrained market clearing data submitted by the power transaction center, carries out safety check and verification, generates data such as constrained market clearing data, dispatching information or the like, and uploads the data to the blockchain for evidence storage.
(5) The aggregator acquires the constrained market clearing data and signs a green power transaction contract with a power seller based on market clearing information, the contract of the aggregator includes a total transaction quantity of power of the aggregator and may also include a respective transaction quantity of power decomposed into each of the small-scale power users, and contract-related data is uploaded to the blockchain for evidence storage.

It is worth noting that when the aggregator participates in power transactions, the aggregator is allowed to carry out contract assignment or contract repurchase or other transactions monthly or at a shorter period based on an actual power generation and consumption situation, which needs to sign a new contract assignment or contract repurchase agreement and upload relevant agreement information to the blockchain for evidence storage.

(6) The power grid company generates green power quantity settlement information of the aggregator based on a total quantity of power consumed by each of the small-scale power users subordinate to the aggregator, a quantity of power in the contract of the aggregator, contract assignment and contract repurchase or other information, and uploads relevant information to the blockchain for evidence storage.

The total quantity of power consumed by each of the small-scale power users is calculated based on the 15-minute fine-grained power consumption quantity acquired by the blockchain trusted measurement device, a smart contract for calculating a total power consumption quantity may be designed with measurement start time and end time as parameters to achieve automatic calculation. A total power consumption quantity of the aggregator is equal to a sum of the total quantity of power consumed by each of the small-scale power users.

(7) The aggregator acquires its green power quantity settlement information, decomposes a settlement result to each of the small-scale power users based on a quantity of power consumed by each of the small-scale power users, determines green power quantity settlement information of each of the small-scale power users, and uploads relevant information to the blockchain for evidence storage.

Decomposition of a power consumption quantity settlement result may be automatically achieved by an AI-based method for extracting the quantity of power in the contract of the aggregator. A respective quantity of power consumed by each of the small-scale power users in the contract is obtained by intelligent extraction of texts of the contract of the aggregator, and the green power quantity settlement information of each of the small-scale power users is determined in combination with a result of the smart contract for calculating the total power consumption quantity.

(8) The power transaction center acquires the green power quantity settlement information of the aggregator and the green power quantity settlement information of each of the small-scale power users, and generates green certificate transfer information of each of the small-scale power users after checking that these information are correct.

In conclusion, a green power trusted traceability mechanism for aggregating the small-scale power users to participate in power market transactions is built by uploading full-process information such as 15-minute fine-grained green power consumption data of each of the small-scale power users, aggregation, declaration, transaction, settlement, settlement decomposition or the like to the blockchain, to support the small-scale power users to participate in green power transactions conveniently and support management of the full life cycle of green power.

### 4. Green certificate issuance, right confirmation and allocation for aggregation of multiple entities

For a scenario where distributed resources are aggregated to participate in power transactions, a mechanism of green certificate issuance, right confirmation and allocation for aggregation of multiple entities is designed, to issue a green certificate to each of the distributed resource entities, to solve a problem that the green certificate may be issued to the aggregator only at present, then the distributed resource entities cannot obtain green certificates respectively and suffer from loss of relevant interests.

First, green certificates are transferred to distributed power generation entities participating in aggregation for green power market transactions respectively. The power transaction center generates green certificate transfer information for each of the distributed power generation entities based on green power quantity settlement information of each of the distributed power generation entities, and issues a green certificate to each of the distributed power generation entities. Details may be as follows.
(1) A quantity of power generated by an i-th distributed power generation entity is *Eᵢ*. For a distributed power generation entity of which an on-grid quantity of power exceeds 1 MWh, an individual ownership green certificate is issued to a quantity of power meeting 1 MWh, and a common ownership green certificate is issued to a remaining quantity of power.
(2) In case that a quantity of power generated by a single distributed power generation entity is less than 1 MWh while a total quantity of power generated by multiple power generation entities is equal to or greater than 1 MWh, a green certificate is issued to aggregation of the multiple entities, while a proportion of a quantity of power generated by each of the power generation entities is calculated, and each of the power generation entities has a corresponding proportion of ownership of the green certificate.
(3) For a remaining quantity of power s where a power generation quantity after the aggregation is still less than 1 MWh, a green certificate is not issued thereto temporarily, and remaining power generation quantity information (*s*₁, *s*₂, *..., sₙ*) of each of the power generation entities is uploaded to the blockchain for evidence storage, to wait for a next settlement cycle.

Second, green certificates are transferred to small-scale power users participating in aggregation for green power market transactions respectively. The power transaction center generates green certificate transfer information for each of the small-scale power users based on green power quantity settlement information of each of the small-scale power users, and issues a green certificate to each of the small-scale power users. Details may be as follows.
(1) For a small-scale power user of which a power consumption quantity exceeds 1 MWh, an individual ownership green certificate is transferred to a quantity of power consumed by it and meeting 1 MWh.
(2) In case that a quantity of power consumed by a single small-scale power user is less than 1 MWh while a total quantity of power consumed by multiple small-scale power users is equal to or greater than 1 MWh, a green certificate is transferred to aggregation of the multiple small-scale power users, while a proportion of a quantity of power consumed by each of the small-scale power users is calculated, and each of the small-scale power users has a corresponding proportion of ownership of the green certificate.
(3) For a remaining quantity of power where a power consumption quantity after the aggregation is still less than 1 MWh, a green certificate is not issued thereto temporarily, and remaining power consumption quantity information of each of the small-scale power users is uploaded to the blockchain for evidence storage, to wait for a next settlement cycle.

The above calculation processes may refer to the above relevant formulas, and will not be described in detail here.

The green certificate may be issued or transferred in a shorter period through the above mechanism, to provide data support for subsequent green certificate transaction, green power calculation, carbon verification or other activities.

According to the above embodiment, green power of aggregation of multiple entities, the green certificate traceability, right confirmation, subsequent flexible transaction or usage or the like may be achieved.

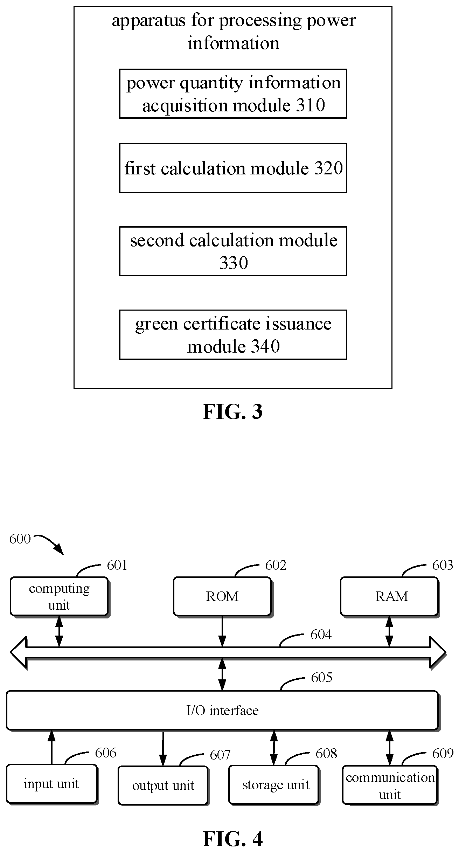

FIG. 3 is a structural block diagram of an apparatus for processing green power information according to an embodiment of the application.

As shown in FIG. 3, the apparatus may include a power quantity information acquisition module 310, a first calculation module 320, a second calculation module 330 and a green certificate issuance module 340.

The power quantity information acquisition module 310 is configured to: in response to a current settlement requested for an aggregator, acquire a certificate-to-be-issued quantity of green power of each of multiple distributed resource entities corresponding to the aggregator.

The first calculation module 320 is configured to: for each of the distributed resource entities, in case that the certificate-to-be-issued quantity of green power of each of the distributed resource entities exceeds a redemption standard quantity of power for redeeming a green certificate, determine a first number of individual ownership green certificates of each of the distributed resource entities and a first remaining quantity of power of each of the distributed resource entities in the current settlement based on the certificate-to-be-issued quantity of green power of each of the distributed resource entities and the redemption standard quantity of power; in case that the certificate-to-be-issued quantity of green power of each of the distributed resource entities does not exceed the redemption standard quantity of power, use the certificate-to-be-issued quantity of green power of each of the distributed resource entities as the first remaining quantity of power of each of the distributed resource entities in the current settlement.

The second calculation module 330 is configured to determine a second number of common ownership green certificates of the multiple distributed resource entities based on the first remaining quantity of power of each of the distributed resource entities in the current settlement.

The green certificate issuance module 340 is configured to issue corresponding green certificates to the multiple distributed resource entities corresponding to the aggregator based on the first number of individual ownership green certificates of each of the distributed resource entities and the second number of common ownership green certificates of the multiple distributed resource entities.

In an implementation, the first calculation module 320 includes a first number calculation unit and a first remaining power quantity calculation unit.

The first number calculation unit is configured to obtain the first number of individual ownership green certificates of each of the distributed resource entities by rounding a ratio between the certificate-to-be-issued quantity of green power of each of the distributed resource entities and the redemption standard quantity of power.

The first remaining power quantity calculation unit is configured to obtain the first remaining quantity of power of each of the distributed resource entities in the current settlement by subtracting a product of the redemption standard quantity of power and the first number from the certificate-to-be-issued quantity of green power of each of the distributed resource entities.

In an implementation, the second calculation module 330 is specifically configured to:
obtain the second number of common ownership green certificates of the multiple distributed resource entities by summing the first remaining quantity of power of each of the distributed resource entities in the current settlement and rounding a ratio of a summing result to the redemption standard quantity of power.

In an implementation, the power quantity information acquisition module 310 includes an information acquisition unit, a first power quantity determination unit, a second power quantity determination unit, a third power quantity determination unit, a fourth power quantity determination unit and a fifth power quantity determination unit.

The information acquisition unit is configured to acquire a smart contract and a contract text of the aggregator from a blockchain.

The first power quantity determination unit is configured to determine a first total transaction quantity of power of the aggregator, from the contract text.

The second power quantity determination unit is configured to obtain a first transaction quantity of power of each of the distributed resource entities by decomposing the first total transaction quantity of power.

The third power quantity determination unit is configured to: in case that the first total transaction quantity of power is matched with a second total transaction quantity of power of the aggregator calculated by the smart contract, and the first transaction quantity of power of each of the distributed resource entities is matched with a second transaction quantity of power of a corresponding one of the distributed resource entities calculated by the smart contract respectively, determine a certificate-to-be-issued quantity of green power of each of the distributed resource entities in the current settlement based on a second transaction quantity of power of each of the distributed resource entities calculated by the smart contract.

The fourth power quantity determination unit is configured to acquire a remaining certificate-to-be-issued quantity of green power of each of the distributed resource entities in a previous settlement, from the blockchain.

The fifth power quantity determination unit is configured to sum the certificate-to-be-issued quantity of green power of each of the distributed resource entities in the current settlement and the remaining certificate-to-be-issued quantity of green power of each of the distributed resource entities in the previous settlement respectively, to update the certificate-to-be-issued quantity of green power of each of the distributed resource entities in the current settlement.

In an implementation, the above apparatus may further include a third calculation module and a fourth calculation module.

The third calculation module is configured to obtain a second remaining quantity of power of the multiple distributed resource entities in the current settlement by summing the first remaining quantity of power of each of the distributed resource entities in the current settlement and subtracting a product of the second number and the redemption standard quantity of power from a summing result.

The fourth calculation module is configured to: in case of determining that the second remaining quantity of power is greater than zero and less than the redemption standard quantity of power, for each of the distributed resource entities, obtain a remaining certificate-to-be-issued quantity of green power of each of the distributed resource entities in the current settlement by subtracting a sum of a corresponding quantity of power of each of the distributed resource entities in each of the common ownership green certificates from the first remaining quantity of power of each of the distributed resource entities in the current settlement, here the remaining certificate-to-be-issued quantity of green power of each of the distributed resource entities in the current settlement is used in a next settlement requested for the aggregator.

In an implementation, each of the multiple distributed resource entities has a type of a distributed power generation entity or a distributed power user.

Descriptions of specific functions and examples of each module and sub-module of a system according to an embodiment of the application, may refer to relevant descriptions of corresponding operations in the above method embodiment, and will not be elaborated here.

According to an embodiment of the application, the above method of the application may be applied to an electronic device and a readable storage medium.

FIG. 4 shows a schematic block diagram of an exemplary electronic device 600 that may be configured to implement the embodiments of the application. The electronic device is intended to represent various forms of digital computers, such as a laptop computer, a desktop computer, a work station, a Personal Digital Assistant (PDA), a server, a blade server, a mainframe computer, or other suitable computers. The electronic device may also represent various forms of mobile devices, such as a PDA, a cellular phone, a smart phone, a wearable device, or other similar computing devices. Components shown here, their connections and relationships, and their functions are examples only, and are not intended to limit implementations of the application described and/or claimed here.

As shown in FIG. 4, the device 600 includes a computing unit 601 that may perform various appropriate actions and processes based on a computer program stored in a Read Only Memory (ROM) 602 or a computer program loaded from a storage unit 608 into a Random Access Memory (RAM) 603. Various programs and data required for operations of the device 600 may also be stored in the RAM 603. The computing unit 601, the ROM 602 and the RAM 603 are connected to each other by a bus 604. An input/output (I/O) interface 605 is also connected to the bus 604.

Multiple components in the device 600 are connected to the I/O interface 605, and include: an input unit 606, such as a keyboard, a mouse or the like; an output unit 607, such as various types of displays, speakers or the like; a storage unit 608, such as a magnetic disk, an optical disk or the like; and a communication unit 609, such as a network card, a modem, a wireless communication transceiver or the like. The communication unit 609 allows the device 600 to exchange information/data with other devices through a computer network such as the Internet and/or various telecommunication networks.

The computing unit 601 may be various general-purpose and/or special-purpose processing components with processing and computing capabilities. Some examples of the computing unit 601 include, but are not limited to a Central Processing Unit (CPU), a Graphics Processing Unit (GPU), various specialized AI computing chips, various computing units running machine learning model algorithms, a Digital Signal Processor (DSP), and any suitable processor, controller and microcontroller, etc. The computing unit 601 performs various methods and processes as described above, such as a method for processing green power information. For example, in some embodiments, a method for processing green power information may be implemented as a computer software program, and the computer software program is tangibly contained in a machine-readable medium, such as the storage unit 608. In some embodiments, part or all of the computer program may be loaded and/or installed onto the device 600 through the ROM 602 and/or the communication unit 609. When the computer program is loaded into the RAM 603 and is executed by the computing unit 601, one or more operations of the method for processing green power information as described above may be performed. Alternatively, in other embodiments, the computing unit 601 may be configured to perform the method for processing green power information by any other appropriate manners (e.g., by means of firmware).

Various implementations of the system and technologies as described above in the application may be implemented in a digital electronic circuit system, an integrated circuit system, a Field Programmable Gate Array (FPGA), an Application Specific Integrated Circuit (ASIC), an Application Specific Standard Products (ASSP), a system-on-chip (SOC) system, a Complex Programmable Logic Device (CPLD), computer hardware, firmware, software, and/or any combination thereof. These various implementations may include that they are implemented in one or more computer programs, the one or more computer programs may be executed and/or interpreted on a programmable system including at least one programmable processor, the at least one programmable processor may be a special-purpose or general-purpose programmable processor and may receive/transmit data and instructions from/to a storage system, at least one input device and at least one output device.

Program codes for implementing the method according to the application may be written in any combination of one or more programming languages. These program codes may be provided to a processor or controller of a general-purpose computer, a special-purpose computer or other programmable data processing devices, such that when these program codes are executed by the processor or controller, these program codes enable functions/operations specified in the flowchart and/or block diagram to be implemented. These program codes may be entirely executed on a machine, partially executed on a machine, partially executed on a machine and partially executed on a remote machine as a standalone software package, or entirely executed on a remote machine or server.

In the context of the application, the machine-readable medium may be a tangible medium, and may contain or store a program to be used by or in combination with an instruction execution system, apparatus or device. The machine-readable medium may be a machine-readable signal medium or a machine-readable storage medium. The machine-readable medium may include, but is not limited to an electronic, magnetic, optical, electromagnetic, infrared or semiconductor system, apparatus or device, or any suitable combination thereof. More specific examples of a machine-readable storage medium may include an electrical connection based on one or more lines, a portable computer disk, a hard disk, a RAM, a ROM, an Erasable Programmable Read Only Memory (EPROM or a flash memory), an optical fiber, a convenient Compact Disk Read Only Memory (CD-ROM), an optical storage device, a magnetic storage device, or any suitable combination thereof.

In order to provide interaction with a user, the system and technologies described here may be implemented on a computer, the computer is provided with: a display device (such as a Cathode Ray Tube (CRT) or Liquid Crystal Display (LCD) monitor) configured to display information to the user; a keyboard and a pointing device (such as a mouse or a trackball) through which the user may provide inputs to the computer. Other types of devices may also be used for providing interaction with the user. For example, feedback provided to the user may be any form of sensory feedback (such as visual feedback, auditory feedback, or tactile feedback), and inputs from the user may be received in any form (including acoustic input, voice input, or tactile input).

The system and technologies described here may be implemented in a computing system including a back-end component (for example, it is used as a data server), or a computing system including a middleware component (such as an application server), or a computing system including a front-end component (such as a user computer with a graphical user interface or web browser through which the user may interact with implementations of the system and technologies described here), or a computing system including any combination of such back-end component, middleware component or front-end component. The components of the system may be connected to each other by any form or medium of digital data communication (such as a communication network). Examples of the communication network include a Local Area Network (LAN), a Wide Area Network (WAN) and the Internet.

The computer system may include a client and a server. The client and the server are usually remote from each other and usually interact with each other through a communication network. A relationship between the client and the server is generated by computer programs executed on a corresponding computer and having a client-server relationship with each other. The server may be a cloud server, a server of a distributed system, or a server combined with a blockchain.

It should be understood that operations may be reordered, added or deleted by using various forms of flows as shown above. For example, the operations described in the application may be performed in parallel, or may be performed sequentially, or may be performed in different orders, and are not limited here, as long as desired results of the technical solutions disclosed in the application may be achieved.

The above specific implementations do not constitute limitation on the scope of protection of the application. It should be understood by those skilled in the art that various modifications, combinations, sub-combinations and replacements may be made depending on design requirements and other factors. Any modification, equivalent replacement, improvement or the like made within the principle of the application should fall within the scope of protection of the application.

## Claims

1. A method for processing green power information, comprising:
in response to a current settlement requested for an aggregator, acquiring a certificate-to-be-issued quantity of green power of each of a plurality of distributed resource entities corresponding to the aggregator;
for each of the distributed resource entities, in case that the certificate-to-be-issued quantity of green power of each of the distributed resource entities exceeds a redemption standard quantity of power for redeeming a green certificate, determining a first number of individual ownership green certificates of each of the distributed resource entities and a first remaining quantity of power of each of the distributed resource entities in the current settlement based on the certificate-to-be-issued quantity of green power of each of the distributed resource entities and the redemption standard quantity of power; in case that the certificate-to-be-issued quantity of green power of each of the distributed resource entities does not exceed the redemption standard quantity of power, using the certificate-to-be-issued quantity of green power of each of the distributed resource entities as the first remaining quantity of power of each of the distributed resource entities in the current settlement;
determining a second number of common ownership green certificates of the plurality of distributed resource entities based on the first remaining quantity of power of each of the distributed resource entities in the current settlement; and
issuing corresponding green certificates to the plurality of distributed resource entities corresponding to the aggregator based on the first number of individual ownership green certificates of each of the distributed resource entities and the second number of common ownership green certificates of the plurality of distributed resource entities.

2. The method of claim 1, wherein determining the first number of individual ownership green certificates of each of the distributed resource entities and the first remaining quantity of power of each of the distributed resource entities in the current settlement based on the certificate-to-be-issued quantity of green power of each of the distributed resource entities and the redemption standard quantity of power, comprises:
obtaining the first number of individual ownership green certificates of each of the distributed resource entities by rounding a ratio between the certificate-to-be-issued quantity of green power of each of the distributed resource entities and the redemption standard quantity of power; and
obtaining the first remaining quantity of power of each of the distributed resource entities in the current settlement by subtracting a product of the redemption standard quantity of power and the first number from the certificate-to-be-issued quantity of green power of each of the distributed resource entities.

3. The method of claim 1, wherein determining the second number of common ownership green certificates of the plurality of distributed resource entities based on the first remaining quantity of power of each of the distributed resource entities in the current settlement, comprises:
obtaining the second number of common ownership green certificates of the plurality of distributed resource entities by summing the first remaining quantity of power of each of the distributed resource entities in the current settlement and rounding a ratio of a summing result to the redemption standard quantity of power.

4. The method of claim 1 or 3, wherein acquiring the certificate-to-be-issued quantity of green power of each of the plurality of distributed resource entities corresponding to the aggregator, comprises:
acquiring a smart contract and a contract text of the aggregator from a blockchain;
determining a first total transaction quantity of power of the aggregator, from the contract text;
obtaining a first transaction quantity of power of each of the distributed resource entities by decomposing the first total transaction quantity of power;
in case that the first total transaction quantity of power is matched with a second total transaction quantity of power of the aggregator calculated by the smart contract, and the first transaction quantity of power of each of the distributed resource entities is matched with a second transaction quantity of power of a corresponding one of the distributed resource entities calculated by the smart contract respectively, determining a certificate-to-be-issued quantity of green power of each of the distributed resource entities in the current settlement based on a second transaction quantity of power of each of the distributed resource entities calculated by the smart contract;
acquiring a remaining certificate-to-be-issued quantity of green power of each of the distributed resource entities in a previous settlement, from the blockchain; and
summing the certificate-to-be-issued quantity of green power of each of the distributed resource entities in the current settlement and the remaining certificate-to-be-issued quantity of green power of each of the distributed resource entities in the previous settlement respectively, to update the certificate-to-be-issued quantity of green power of each of the distributed resource entities in the current settlement.

5. The method of claim 3 or 4, further comprising:
obtaining a second remaining quantity of power of the plurality of distributed resource entities in the current settlement by summing the first remaining quantity of power of each of the distributed resource entities in the current settlement and subtracting a product of the second number and the redemption standard quantity of power from a summing result; and
in case of determining that the second remaining quantity of power is greater than zero and less than the redemption standard quantity of power, for each of the distributed resource entities, obtaining a remaining certificate-to-be-issued quantity of green power of each of the distributed resource entities in the current settlement by subtracting a sum of a corresponding quantity of power of each of the distributed resource entities in each of the common ownership green certificates from the first remaining quantity of power of each of the distributed resource entities in the current settlement, wherein the remaining certificate-to-be-issued quantity of green power of each of the distributed resource entities in the current settlement is used in a next settlement requested for the aggregator.

6. The method of any one of claims 1 to 5, wherein each of the plurality of distributed resource entities has a type of a distributed power generation entity or a distributed power user.

7. An apparatus for processing green power information, comprising:
a power quantity information acquisition module, configured to: in response to a current settlement requested for an aggregator, acquire a certificate-to-be-issued quantity of green power of each of a plurality of distributed resource entities corresponding to the aggregator;
a first calculation module, configured to: for each of the distributed resource entities, in case that the certificate-to-be-issued quantity of green power of each of the distributed resource entities exceeds a redemption standard quantity of power for redeeming a green certificate, determine a first number of individual ownership green certificates of each of the distributed resource entities and a first remaining quantity of power of each of the distributed resource entities in the current settlement based on the certificate-to-be-issued quantity of green power of each of the distributed resource entities and the redemption standard quantity of power; in case that the certificate-to-be-issued quantity of green power of each of the distributed resource entities does not exceed the redemption standard quantity of power, use the certificate-to-be-issued quantity of green power of each of the distributed resource entities as the first remaining quantity of power of each of the distributed resource entities in the current settlement;
a second calculation module, configured to determine a second number of common ownership green certificates of the plurality of distributed resource entities based on the first remaining quantity of power of each of the distributed resource entities in the current settlement; and
a green certificate issuance module, configured to issue corresponding green certificates to the plurality of distributed resource entities corresponding to the aggregator based on the first number of individual ownership green certificates of each of the distributed resource entities and the second number of common ownership green certificates of the plurality of distributed resource entities.

8. The apparatus of claim 7, wherein the first calculation module comprises:
a first number calculation unit, configured to obtain the first number of individual ownership green certificates of each of the distributed resource entities by rounding a ratio between the certificate-to-be-issued quantity of green power of each of the distributed resource entities and the redemption standard quantity of power; and
a first remaining power quantity calculation unit, configured to obtain the first remaining quantity of power of each of the distributed resource entities in the current settlement by subtracting a product of the redemption standard quantity of power and the first number from the certificate-to-be-issued quantity of green power of each of the distributed resource entities.

9. An electronic device, comprising:
at least one processor; and
a memory communicatively connected to the at least one processor,
wherein the memory has stored thereon instructions executable by the at least one processor, the instructions are executed by the at least one processor to enable the at least one processor to perform the method of any one of claims 1 to 6.

10. A non-transitory computer-readable storage medium, having stored thereon computer instructions, wherein the computer instructions enable a computer to perform the method of any one of claims 1 to 6.
